# EUROPÄISCHE PATENTSCHRIFT

(11) **EP 3 814 169 B1**
(45) Veröffentlichungstag und Bekanntmachung des Hinweises auf die Patenterteilung: **21.09.2022**
(21) Anmeldenummer: 19734337.9
(22) Anmeldetag: 25.06.2019
(51) Int. Cl.: B60N 2/01, B60N 2/68, B62D 21/10, B62D 21/12, B62D 25/20

(54) **FAHRZEUGSITZEINRICHTUNG, FAHRZEUGSITZSYSTEM UND KRAFTFAHRZEUG**
VEHICLE SEATING SET-UP, VEHICLE SEATING SYSTEM AND AUTOMOTIVE VEHICLE
INSTALLATION SIÈGE DE VÉHICULE, SYSÈME DE SIÈGE DE VÉHICULE ET VÉHICULE AUTOMOBILE

(30) Priorität: 27.06.2018 DE 102018210442
(43) Veröffentlichungstag der Anmeldung: 05.05.2021
(73) Patentinhaber: VOLKSWAGEN AKTIENGESELLSCHAFT, 38440 Wolfsburg (DE)
(72) Erfinder: BOY, Hans-Joachim, 38518 Gifhorn (DE); ANDERSCH, Sten, 38126 Braunschweig (DE); SCHULZ, Axel, 38479 Tappenbeck (DE); SCHILLING, Thomas, 38524 Sassenburg (DE)
(86) Internationale Anmeldenummer: PCT/EP2019/066742
(87) Internationale Veröffentlichungsnummer: WO 2020/002279

(56) Entgegenhaltungen:
- EP-A1- 0 618 128
- DE-A1-102010 011 268
- FR-A1- 2 982 566
- JP-A- H06 199 137
- JP-A- 2013 252 772
- US-A1- 2001 030 069
- US-A1- 2017 106 769

## Beschreibung

Die Erfindung betrifft eine Fahrzeugsitzeinrichtung für eine Rückbank eines Kraftfahrzeugs, mit einer Sitzwanne, die an einer Karosserie des Kraftfahrzeugs befestigbar ist und dazu dient, zumindest ein Sitzpolster zu tragen, wobei die Sitzwanne eine vorderen Randabschnitt, in welchem ein Fersenblech anordenbar oder angeordnet ist, einen hinteren Randabschnitt, in welchem eine Rückenlehne anordenbar oder angeordnet ist, sowie zwei seitliche Randabschnitte aufweist, die jeweils von dem vorderen Randabschnitt zu dem hinteren Randabschnitt führen, aufweist.

Ferner betrifft die Erfindung ein Fahrzeugsystem für Rückbänke von Kraftfahrzeugen, mit mehreren Fahrzeugsitzeinrichtungen, wie sie vorstehend beschrieben wurden. Außerdem betrifft die Erfindung ein Kraftfahrzeug mit der vorstehend genannten Fahrzeugsitzeinrichtung. Bei Kraftfahrzeugen mit herkömmlichem Verbrennungsmotor ist es üblich, dass unter der Rückbank ein Tank für den Kraftstoff der Brennkraftmaschine angeordnet ist. Die Karosserie des Kraftfahrzeugs haust dabei den Tank zumindest im Wesentlichen ein, um auch eine hohe Unfallsicherheit zu gewährleisten. Dabei wird üblicherweise ein den Tank überdeckender Abschnitt der Karosserie als Sitzwanne ausgebildet, auf welcher Polster mit Bezug für die Rückbank auflegbar sind. Darüber hinaus ist es beispielsweise aus der Offenlegungsschrift DE 10 2014 203 044 A1 bekannt, die Sitzwanne als separates Bauteil zu fertigen und an der Karosserie des Kraftfahrzeugs stoffschlüssig und/oder form- beziehungsweise reibschlüssig zu befestigen. Dabei ist an der Sitzwanne optional ein Fersenblech angeordnet. Wie genau die Befestigung der Sitzwanne an der Karosserie zu erfolgen hat wird jedoch in der Offenlegungsschrift nicht beschrieben. Weitere Fahrzeugsitzeinrichtungen mit einer Sitzwanne sind beispielsweise auch aus den Druckschriften DE 10 2012 200 441 A1, JP 2013 252772 A, US 2017/106769 A1, EP 0 618 128 A1, US 2001/030069 A1 und DE 10 2010 011 268 A1 bekannt.

Der Erfindung liegt die Aufgabe zugrunde, eine verbesserte Fahrzeugsitzeinrichtung zu schaffen, die vorteilhaft in die Karosserie integriert ist und insbesondere die Gesamt-Torsionssteifigkeit des Kraftfahrzeugs beziehungsweise der Karosserie im verbauten Zustand erhöht.

Die der Erfindung zugrunde liegende Aufgabe wird durch eine Fahrzeugsitzeinrichtung mit den Merkmalen des Anspruchs 1 gelöst. Die erfindungsgemäße Fahrzeugsitzeinrichtung hat den Vorteil, dass die Sitzwanne einen integralen Bestandteil der Karosserie bildet, wobei durch ihre vorteilhafte Montage eine einfache Demontage jederzeit möglich ist und insgesamt dadurch ein vorteilhafter Gesamtmontageprozess des Kraftfahrzeugs ermöglicht wird, weil beispielsweise der Stauraum unterhalb der Sitzwanne bei der Erstmontage einfach zugängig ist, und später in einfacher Art und Weise durch das Entfernen der Sitzwanne wieder zugängig gemacht werden kann. Erfindungsgemäß ist hierzu vorgesehen, dass in jedem Randabschnitt der Sitzwanne zumindest eine Schraubenöffnung für eine Befestigungsschraube zum Befestigen der Wanne an der Karosserie des Kraftfahrzeugs ausgebildet ist, wobei die Sitzwanne insbesondere nur durch die Verschraubung an der Karosserie befestigt ist. Dadurch, dass die Sitzwanne an ihren Randabschnitten jeweils mit der Karosserie verschraubt wird, ist gewährleistet, dass die Karosseriewanne fest in die Karosserie integriert ist. Durch das Vorsehen der Schrauben in den Randabschnitten wird erreicht, dass die Sitzwanne steif mit der restlichen Karosserie verbunden ist und dadurch einen vorteilhaften Lastpfad durch die Karosserie mitbildet, der zur Verbesserung der Torsionssteifigkeit beiträgt. Darüber hinaus sind die Verschraubungen jederzeit einfach zu lösen und durch das Auflegen und Abnehmen der Sitzwanne der Stauraum unter der Sitzwanne jederzeit zugängig. Insbesondere kann bei der Konstruktion und Herstellung des Kraftfahrzeugs auf eine aufwändige Verschweißung der Sitzwanne mit Karosseriestrukturen sowie ein aufwändiger Aufbau der Karosseriestruktur vermieden werden.

Vorteilhaft ist das Fersenblech an der Sitzwanne verschraubt ausgebildet.

Insbesondere wird durch die lösbare Verbindung des Fersenblechs an der Sitzwanne durch Verschrauben gewährleistet, dass die Sitzwanne und das Fersenblech jederzeit wieder voneinander gelöst werden können. Außerdem wird durch das separate Ausbilden des Fersenblechs und das nachträgliche Anbringen an die Sitzwanne gewährleistet, dass die Fahrzeugsitzeinrichtung beispielsweise allein durch den Austausch des Fersenblechs an unterschiedliche Kraftfahrzeugtypen anpassbar ist. Vorteilhaft können mehrere unterschiedliche Fersenbleche zur Verfügung gestellt werden, aus denen eines zur Anpassung der Fahrzeugsitzeinrichtung an ein bestimmtes Kraftfahrzeug wählbar ist, um es mit der Sitzwanne, die optimalerweise für eine Vielzahl von Kraftfahrzeugtypen identisch ausgebildet ist, zu verbinden. Entsprechend können auch unterschiedliche Sitzwannen mit demselben Fersenblech verbunden werden, um eine Anpassung an bestimmte Kraftfahrzeuge oder Kraftfahrzeugtypen vorzunehmen.

Weiterhin ist bevorzugt vorgesehen, dass im hinteren Randabschnitt eine oder mehrere randoffene Aussparungen zur Aufnahme von Sicherheitseinrichtungen, insbesondere Gurtschlösser oder Haltebügel oder dergleichen, ausgebildet ist. Die Sitzwanne weist also in ihrem hinteren Randabschnitt eine oder mehrere Aussparungen auf, die als Platzhalter für Sicherheitseinrichtungen dienen, weil die Sicherheitseinrichtungen beispielsweise bereits an der Karosserie des Kraftfahrzeugs fest verbaut sind. So werden beispielsweise Gurthalter oder Sicherheitsbügel von Kindersitz-Haltesystemen direkt an der Karosserie angebunden, um eine besonders hohe Belastbarkeit zu gewährleisten. Dabei ist die Position und Anordnung dieser Sicherheitseinrichtung im Kraftfahrzeug im Wesentlichen vorgegeben, so dass durch das Vorsehen der Aussparungen in der Sitzwanne eine einfache Integration der Sicherheitseinrichtungen in die Fahrzeugsitzeinrichtung erfolgt, indem die Anordnung der Aussparungen der Anordnung der Sicherheitseinrichtungen entspricht.

Erfindungsgemäß ist weiterhin in der Sitzwanne zumindest eine Tragehilfe ausgebildet. Durch die Tragehilfe wird die Montage für menschliche Monteure einerseits und für Montageroboter andererseits vereinfacht, weil durch die vorhandene Tragehilfe ein vorgegebener Greifpunkt zum Greifen und Transportieren der Sitzwanne vorhanden ist. Die Tragehilfe ist derart in die Sitzwanne integriert, dass eine einfache Handhabung der Sitzwanne gewährleistet ist. Dazu ist die Tragehilfe mittig in der Sitzwanne ausgebildet, so dass durch einen einzigen Greifpunkt die gesamte Sitzwanne angehoben werden kann, ohne dass sie aufgrund einer ungleichen Gewichtsverteilung zu kippen beginnt. Die Tragehilfe ist beispielsweise als von der Sitzwanne vorstehender Vorsprung oder als in der Sitzwanne ausgebildete Vertiefung, in welche der Benutzer oder der Montageroboter eingreifen kann, ausgebildet.

Erfindungsgemäß weist die Tragehilfe zumindest eine Montageaussparung in der Sitzwanne auf. Die Aussparung, insbesondere Durchbruch, erlaubt es, dass der Benutzer oder der Montageroboter durch die Sitzwanne hindurch und die Sitzwanne hintergreifen kann, um diese einfach zu transportieren. Bevorzugt ist die Montageaussparung als Montageschlitz ausgebildet, der das Material der Sitzwanne möglichst wenig schwächt, so dass durch das Vorsehen der Tragehilfe die Robustheit der Sitzwanne und der Fahrzeugsitzeinrichtung insgesamt nicht beeinträchtigt wird.

Wie bereits erwähnt ist die Montageaussparung erfindungsgemäß mittig in der Sitzwanne ausgebildet, um ein einfaches Greifen der Sitzwanne an nur einer Stelle derart zu gewährleisten, dass das Gewicht der Sitzwanne in Bezug auf die Tragehilfe beziehungsweise die Montageaussparung gleichmäßig verteilt ist.

Gemäß einer bevorzugten Weiterbildung der Erfindung weist die Sitzwanne an zumindest einem Randabschnitt wenigstens einen Positioniervorsprung auf. Der Positioniervorsprung dient dazu, in eine Positionieraufnahme der Karosserie formschlüssig und zumindest im Wesentlichen spielfrei eingesteckt zu werden. Hierdurch ist eine einfache Montage der Sitzwanne an der Karosserie gewährleistet, weil durch das Zuführen des Positioniervorsprungs zu der Positionieraufnahme eine einfache Ausrichtung der Sitzwanne an der Karosserie gewährleistet ist. Vorzugsweise sind an der Sitzwanne mehrere Positioniervorsprünge und/oder Positioniervertiefungen ausgebildet, die mit entsprechenden Positioniervertiefungen und/oder Positioniervorsprüngen der Karosserie zum Ausrichten der Sitzwanne an der Karosserie zusammenwirken. Insbesondere sind an der Sitzwanne zumindest zwei Positioniervorsprünge oder Positioniervertiefungen ausgebildet, so dass ein eindeutiges Positionieren der Sitzwanne an der Karosserie durch die Positioniervorsprünge gewährleistet ist.

Besonders bevorzugt ist der jeweilige Positioniervorsprung einstückig mit der Sitzwanne ausgebildet. Beispielsweise ist der Positioniervorsprung durch eine Verformung der Sitzwanne, insbesondere durch einen Stanzbiegevorgang oder Tiefziehvorgang, ausgebildet. Dadurch ist eine kostengünstige und robuste Ausbildung des Positioniervorsprungs an der Sitzwanne gewährleistet.

Gemäß einer bevorzugten Ausführungsform der Erfindung ist die Sitzwanne als Blechteil ausgebildet. Hierdurch weist die Sitzwanne eine vorteilhafte Steifigkeit auf, die die zuvor genannte vorteilhafte Integration in die Fahrzeugkarosserie insbesondere zur Torsionssteifigkeitserhöhung kostengünstig gewährleistet. Ebenfalls ist hierbei die einstückige Ausbildung eines oder mehrerer Positioniervorsprünge durch eine Verformung des Blechteils mit einfachen Mitteln erreichbar.

Vorteilhaft kann eine Vielzahl von Sitzwannen und/oder Fersenblechen vorhanden sein, die miteinander kombinierbar sind, wobei zumindest zwei unterschiedlich ausgebildete Fersenbleche zur Anpassung der Fahrzeugsitzeinrichtung an unterschiedliche Kraftfahrzeuge vorhanden sein können.

Alternativ oder zusätzlich können zumindest zwei unterschiedlich ausgebildete Sitzwannen für den gleichen Zweck vorhanden sein.

Wie zuvor bereits erwähnt, ergibt sich dadurch ein vorteilhaftes Baukastensystem, aus welchem eine passende Kombination von Sitzwanne und Fersenblech für ein zu bestückendes Kraftfahrzeug auswählbar ist. Es unterscheiden sich beispielsweise die Fersenbleche in ihrer Größe und/oder Kontur, um eine vorteilhafte Anpassung an einen bestimmten Kraftfahrzeugtypen zu ermöglichen. Wie zuvor bereits erwähnt, ist das Fersenblech bevorzugt an der Sitzwanne verschraubt.

Das erfindungsgemäße Kraftfahrzeug mit den Merkmalen des Anspruchs 6 zeichnet sich durch die erfindungsgemäße Fahrzeugsitzeinrichtung aus. Diese kann beispielsweise auch durch Auswahl einer bestimmten Sitzwanne und eines bestimmten Fersenblechs gebildet sein. Vorteilhaft ist die Sitzwanne an der Karosserie des Kraftfahrzeugs an jedem ihrer Randabschnitte verschraubt. Insbesondere ist die Sitzwanne nur durch Verschraubung an der Karosserie befestigt. Hierdurch ist eine einfache Lösbarkeit der Sitzwanne sowie eine einfache Montage gewährleistet.

Weitere Vorteile und bevorzugte Merkmale und Merkmalskombinationen ergeben sich insbesondere aus dem zuvor Beschriebenen sowie aus den Ansprüchen. Im Folgenden wird die Erfindung anhand der Zeichnung näher erläutert. Dazu zeigen:
- Figur 1: eine vorteilhafte Sitzwanne in einer perspektivischen Darstellung,
- Figur 2: eine vorteilhafte Fahrzeugsitzeinrichtung mit der Sitzwanne aus Figur 1 und
- Figur 3: eine Explosionsdarstellung der Fahrzeugsitzeinrichtung aus Figur 2.

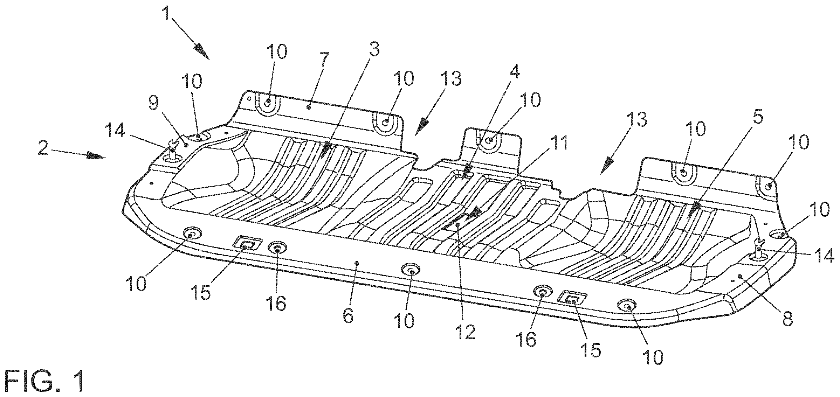

Figur 1 zeigt in einer vereinfachten perspektivischen Darstellung eine vorteilhafte Sitzwanne 1 einer Fahrzeugsitzeinrichtung 2 für ein hier nicht dargestelltes Kraftfahrzeug. Die Sitzwanne 1 ist als Blechteil ausgebildet und weist mehrere Sitzabschnitte 3, 4, 5 auf, die sich durch jeweils eine wannenförmige Vertiefung in der Sitzwanne 1 auszeichnen. Die Sitzwanne ist im Wesentlichen geschlossen ausgebildet und weist einen vorderen Randabschnitt 6, der in Vorwärtsfahrtrichtung, also vorne, liegt, beziehungsweise einer Kniekehle eines Benutzers zuordenbar ist, einen hinteren Randabschnitt 7, an welchem eine Rückenlehne anordenbar ist, sowie zwei seitliche Randabschnitte 8 und 9 auf. In jedem der Randabschnitte 6 bis 9 sind mehrere Schraubenöffnungen 10 für Befestigungsschrauben ausgebildet, um die Sitzwanne 1 an einer Karosserie des Kraftfahrzeugs durch Verschraubung zu befestigen.

Außerdem weist die Sitzwanne mittig, in dem Sitzabschnitt 4 eine Traghilfe 11 in Form einer Montageaussparung 12 auf. Die Montageaussparung 12 erstreckt sich durch die Sitzwanne 1 hindurch und bildet somit einen Durchbruch. Ein Monteur und/oder ein Montageroboter können durch die Montageaussparung 12 hindurch und die Sitzwanne 1 hintergreifen, um diese einfach zu transportieren und zu montieren. Durch die mittige Ausbildung der Traghilfe 11 ist gewährleistet, dass um die Traghilfe 11 herum das Gewicht der Sitzwanne 1 gleichmäßig verteilt ist, so dass ein einfacher Transport der Sitzwanne 1 mit nur einem Tragpunkt sicher möglich ist.

Im hinteren Randabschnitt 7 weist die Sitzwanne 1 außerdem zwei randoffene Aussparungen 13 auf, die derart in der Sitzwanne 1 ausgebildet beziehungsweise angeordnet sind, dass sie zur Aufnahme von Sicherheitseinrichtungen wie insbesondere Gurtschlössern oder Befestigungsbügeln, die fest mit der Karosserie des Kraftfahrzeugs verbunden sind, dienen. Damit können die Sicherheitseinrichtungen durch die Aufnahme 13 hindurch geführt werden und es besteht kein Konflikt mit der Sitzwanne 1 bei der Montage. Vorteilhafterweise sind die Aussparungen 13 derart breit ausgebildet, dass sie zur Aufnahme verschiedener Gurtschlösser und Befestigungsbügel und insbesondere verschiedener Anordnungen von Gurtschlössern und Befestigungsbügeln, wie sie bei unterschiedlich großen Fahrzeugen vorkommen, eingesetzt werden kann. Somit ist die Sitzwanne 1 bei mehreren Fahrzeugen oder Fahrzeugtypen einsetzbar.

Weiterhin weist die Sitzwanne 1 Fanghaken 14 zur Arretierung eines auf die Sitzwanne 1 abgelegten Sitzrahmens auf, sowie Durchbrüche 15 im vorderen Randabschnitt 6, die zur Aufnahme einer Sitzbefestigungstülle dienen.

Des Weiteren sind zumindest im vorderen Randabschnitt 6 zwei Positioniervorsprünge 16 ausgebildet, die von der Sitzwanne 1 nach unten in Richtung eines Auflageabschnitts einer Karosserie, auf welcher die Sitzwanne 1 abgelegt wird, vorstehen. Vorzugsweise weist die Karosserie an der Stelle der Positioniervorsprünge 16 entsprechende Positionieraufnahmen auf, in welche die Vorsprünge 16 zumindest im Wesentlichen spielfrei einsetzbar sind, um eine vorteilhafte Ausrichtung und Anordnung der Sitzwanne 1 an der Karosserie zu ermöglichen. Insbesondere ist dadurch eine einfache Vormontage der Sitzwanne an der Karosserie gewährleistet, die ein anschließendes Verschrauben der Sitzwanne 1 an der Karosserie vereinfacht. Die Positioniervorsprünge 16 sind insbesondere einstückig mit der Sitzwanne 1 ausgebildet und beispielsweise durch eine Verformung, insbesondere durch ein Tiefziehen hergestellt.

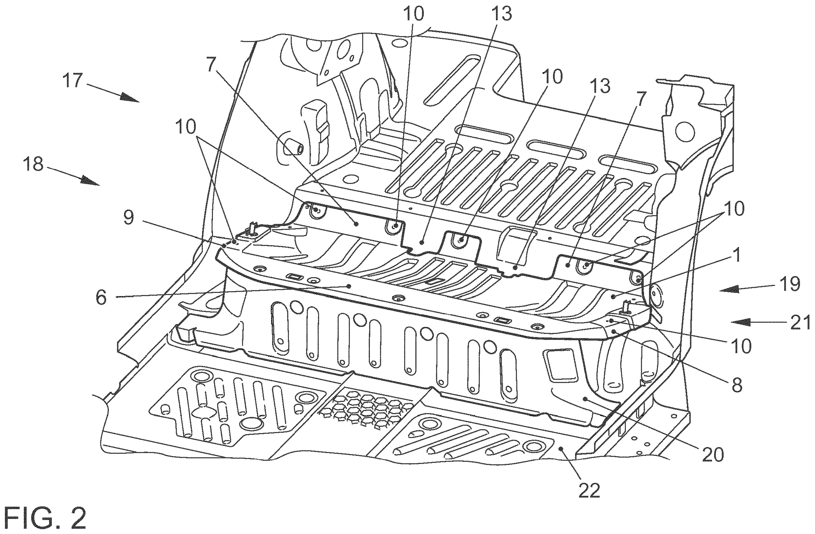

Figur 2 zeigt in einer perspektivischen Darstellung einen Abschnitt einer Karosserie 17 des Kraftfahrzeugs 18, wobei der Abschnitt einer Rückbank 19 gezeigt ist. Die Sitzwanne 1 ist dort zusammen mit einem Fersenblech 20 montiert, so dass sie eine Fahrzeugsitzeinrichtung 21 des Kraftfahrzeugs 18 bilden. Die Sitzwanne 1 ist wie zuvor beschrieben durch Verschraubung an der Karosserie 17 befestigt. Das Fersenblech 20, das ebenfalls als Blechteil ausgebildet ist, ist bevorzugt an der Sitzwanne 1 an deren vorderen Randabschnitt 6, verschraubt.

An ihren Randbereichen 6, 7, 8, 9 liegt die Sitzwanne 1 somit auf der Karosserie 17 auf und ist aufgrund ihrer Verschraubung mit der Karosserie 17 ein integraler Bestandteil der Karosserie 17, der zur Übertragung von Kräften nutzbar ist und dadurch die Torsionsfestigkeit der Karosserie 17 und damit des Kraftfahrzeugs 18 erhöht.

Das Fersenblech 20 ist an die Anordnung der Sitzwanne 1 in dem Kraftfahrzeug 18 angepasst, so dass es sich bis zu einem Fahrzeugboden 22 erstreckt, wo es aufsteht und damit als weitere Stütze für die Sitzwanne 1 dient.

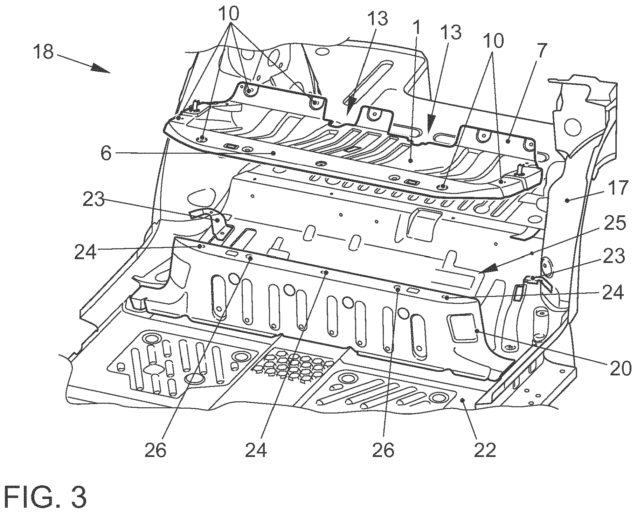

Figur 3 zeigt in einer perspektivischen Explosionsdarstellung die Fahrzeugsitzeinrichtung 21 an der Karosserie 17. Zusätzlich zu Sitzwanne 1 und Fersenblech 20 sind zwei Verstärkungselemente 23 vorhanden, die den seitlichen Randabschnitten 8, 9 der Sitzwanne 1 zugeordnet sind, um dort eine verstärkende Tragefunktion zu bieten. In der Explosionsdarstellung ist auch ersichtlich, dass auch das Fersenblech 20 an seiner der Sitzwanne 1 zugewandten Oberseite mehrere Schraubenöffnungen 24 zur Verbindung mit der Sitzwanne 1 aufweist. Alternativ ist auch ein Vernieten denkbar.

Die Fahrzeugsitzeinrichtung 21 kann vorzugsweise eine Vielzahl von Sitzwannen 1 und Fersenblechen 20 aufweisen. Dabei können zumindest einige der Fersenbleche unterschiedlich ausgebildet sein, so dass es zumindest zwei Typen von Fersenblechen gibt. Alternativ oder zusätzlich können auch zumindest zwei Typen von Sitzwannen vorhanden sein, die sich beispielsweise in ihren Dimensionen und/oder

Konturen unterscheiden. Durch eine passende Auswahl von Sitzwanne 1 und Fersenblech 20 ist die Fahrzeugsitzeinrichtung 21 an unterschiedliche Kraftfahrzeugtypen anpassbar. Insbesondere ist die Sitzwanne vielfältig in verschiedenen Kraftfahrzeugtypen auch aufgrund der vorteilhaften Aussparungen 13 an dem hinteren Radabschnitt 7 einsetzbar. Dadurch ergibt sich eine vielfältige Verwendung der Fahrzeugsitzeinrichtung 1 sowie eine einfache Anpassung an unterschiedliche Kraftfahrzeugtypen. Darüber hinaus ist die Fahrzeugsitzeinrichtung 21 einfach und kostengünstig konstruiert und lässt sich leicht montieren. Die Sitzwanne 1 überdeckt dabei insbesondere einen Stauraum 25, der dann zwischen Sitzwanne 1, Fersenblech 20 und Fahrzeugkarosserie 17 ausgebildet ist und beispielsweise zur Aufnahme von Steuergeräten des Kraftfahrzeugs dient.

Die Sitzwanne 1 dient zudem als Abdeckung und Schutz der darunterliegenden Komponenten, insbesondere der Steuergeräte. Gleichzeitig dient sie zur Aufnahme eines Sitzkissens oder Sitzpolsters, das auf der Sitzwanne 1 anordenbar ist und den Sitzkomfort für eine darauf befindliche Person erhöht. Durch die Fanghaken 14 ist das Sitzkissen oder Sitzpolster einfach und sicher an der Sitzwanne arretierbar, wie vorstehend bereits erwähnt. Dadurch, dass die Sitzwanne 1 exakt an den Vorgaben des Sitzschaums für einen optimalen Sitzkomfort anpassbar ist, wird weder Bauraum verschenkt noch zu viel Schaum für das Sitzkissen verwendet.

Die zuvor genannten Positionieraufnahmen 26 werden gemäß diesem Ausführungsbeispiel durch das Fersenblech 20 zur Verfügung gestellt, das sich auf dem Fahrzeugboden 22 abstützt.

### Bezugszeichenliste

- 1: Sitzwanne
- 2: Fahrzeugsitzeinrichtung
- 3: Sitzabschnitt
- 4: Sitzabschnitt
- 5: Sitzabschnitt
- 6: Randabschnitt
- 7: Randabschnitt
- 8: Randabschnitt
- 9: Randabschnitt
- 10: Schraubenöffnung
- 11: Traghilfe
- 12: Montageaussparung
- 13: Aussparung
- 14: Fanghaken
- 15: Umbruch
- 16: Positioniervorsprung
- 17: Karosserie
- 18: Kraftfahrzeug
- 19: Rückbank
- 20: Fersenblech
- 21: Fahrzeugsitzeinrichtung
- 22: Fahrzeugboden
- 23: Verstärkungselement
- 24: Schraubenöffnung
- 25: Stauraum
- 26: Positionieraufnahme

## Patentansprüche

1. Fahrzeugsitzeinrichtung (21) für eine Rückbank (19) eines Kraftfahrzeugs (18), mit einer Sitzwanne (1), die an einer Karosserie (17) des Kraftfahrzeugs (18) befestigbar ist und dazu dient, zumindest ein Sitzpolster zu tragen, wobei die Sitzwanne (1) einen vorderen Randabschnitt (6), an welchem ein Fersenblech (20) anordenbar oder angeordnet ist, einen hinteren Randabschnitt (7), an welchem eine Rücklehne anordenbar oder angeordnet ist sowie zwei seitliche Randabschnitte (8,9) aufweist, die jeweils von dem vorderen Randabschnitt (6) zu dem hinteren Randabschnitt (7) führen, aufweist, wobei in jedem Randabschnitt (6,8,9) der Sitzwanne (1) zumindest eine Schraubenöffnung (10) für eine Befestigungsschraube zum Befestigen der Sitzwanne (1) an der Karosserie (17) des Kraftfahrzeugs ausgebildet ist, **dadurch gekennzeichnet, dass** in der Sitzwanne (1) zumindest eine Tragehilfe (11) ausgebildet ist, die zumindest eine mittig in der Sitzwanne (1) ausgebildete Montageaussparung (12) aufweist.

2. Fahrzeugsitzeinrichtung nach Anspruch 1, **dadurch gekennzeichnet, dass** im hinteren Randabschnitt (7) eine oder mehrere randoffene Aussparungen (13) zur Aufnahme von Sicherheitseinrichtungen, insbesondere Gurtschlösser oder Haltebügel, ausgebildet ist.

3. Fahrzeugsitzeinrichtung nach einem der vorhergehenden Ansprüche, **dadurch gekennzeichnet, dass** die Sitzwanne (1) an zumindest einem Randabschnitt (6) wenigstens einen Positioniervorsprung (16) aufweist.

4. Fahrzeugsitzeinrichtung nach Anspruch 3, **dadurch gekennzeichnet, dass** der Positioniervorsprung (16) einstückig mit der Sitzwanne (1) ausgebildet ist.

5. Fahrzeugsitzeinrichtung nach einem der vorhergehenden Ansprüche, **dadurch gekennzeichnet, dass** die Sitzwanne (1) als Blechteil ausgebildet ist.

6. Kraftfahrzeug (18) mit einer Karosserie (17) und zumindest einer Rückbank (19), der eine Fahrzeugsitzeinrichtung (2) nach einem der Ansprüche 1 bis 5 zugeordnet ist.

7. Kraftfahrzeug nach Anspruch 6, **dadurch gekennzeichnet, dass** die Sitzwanne (1) an jedem ihrer Randabschnitte (6-9) mit der Karosserie (17) verschraubt ist.

## Claims

1. Vehicle seating set-up (21) for a rear bench seat (19) of an automotive vehicle (18), comprising a seat base (1) which can be fastened to a body (17) of the automotive vehicle (18) and serves to bear at least one seat cushion, wherein the seat base (1) has a front edge portion (6) on which a heel plate (20) can be or is arranged, a rear edge portion (7) on which a backrest can be or is arranged, and two lateral edge portions (8, 9) which respectively lead from the front edge portion (6) to the rear edge portion (7); wherein, in each edge portion (6, 8, 9) of the seat base (1), at least one screw opening (10) is formed for a fastening screw for attaching the seat base (1) to the body (17) of the automotive vehicle, **characterized in that** at least one support aid (11) is formed in the seat base (1), which at least one support aid (11) has at least one mounting recess (12) formed centrally in the seat base (1).

2. Vehicle seating set-up according to claim 1, **characterized in that,** in the rear edge portion (7), one or more edge-open recesses (13) are formed for receiving safety devices, in particular belt buckles or retaining clips.

3. Vehicle seating set-up according to any one of the preceding claims, **characterized in that** the seat base (1) has at least one positioning projection (16) on at least one edge portion (6).

4. Vehicle seating set-up according to claim 3, **characterized in that** the positioning projection (16) is integrally formed with the seat base (1).

5. Vehicle seating set-up according to any one of the preceding claims, **characterized in that** the seat base (1) is formed as a sheet metal part.

6. Automotive vehicle (18) having a body (17) and at least one rear bench seat (19) which is associated with a vehicle seating set-up (2) according to any one of claims 1 to 5.

7. Automotive vehicle according to claim 6, **characterized in that** the seat base (1) is screwed to the body (17) at each of its edge portions (6-9).

## Revendications

1. Ensemble de siège de véhicule (21) pour une banquette arrière (19) d'un véhicule à moteur (18), comprenant un baquet de siège (1), laquelle peut être fixée à une carrosserie (17) du véhicule à moteur (18) et qui sert à porter un coussin de siège, le baquet de siège (1) présentant une partie de bord avant (6), sur laquelle une plaque de tôle (20) est ou peut être disposée, une partie de bord arrière (7), sur laquelle un dossier est ou peut être disposé, ainsi que deux parties de bord latérales (8, 9), lesquelles mènent respectivement de la partie de bord avant (6) à la partie de bord arrière (7), au moins une ouverture (10) pour une vis de fixation pour la fixation du baquet de siège (1) à la carrosserie (17) du véhicule à moteur étant réalisée dans chaque partie de bord (6, 8, 9) du baquet de siège (1), **caractérisé en ce que,** dans le baquet de siège (1), au moins un auxiliaire de portage (11) est réalisé dans le baquet de siège (1), lequel présente au moins une cavité de montage (12) réalisé au centre du baquet de siège (1).

2. Ensemble de siège de véhicule selon la revendication 1, **caractérisé en ce qu'**une ou plusieurs cavités à bord ouvert (13), pour la réception de dispositifs de sécurité, en particulier de boucles de ceinture ou d'étriers de retenue, sont réalisées dans la partie de bord arrière (7).

3. Ensemble de siège de véhicule selon l'une quelconque des revendications précédentes, **caractérisé en ce que** le baquet de siège (1) présente au moins une saillie de positionnement (16) sur au moins une partie de bord (6).

4. Ensemble de siège de véhicule selon la revendication 3, **caractérisé en ce que** la saillie de positionnement (16) est réalisée d'une pièce avec le baquet de siège (1).

5. Ensemble de siège de véhicule selon l'une quelconque des revendications précédentes, **caractérisé en ce que** le baquet de siège (1) est réalisée sous forme d'une pièce de tôle.

6. Véhicule à moteur (18) comprenant une carrosserie (17) et au moins une banquette arrière (19), à laquelle est attribué un ensemble de siège de véhicule (2) selon l'une quelconque des revendications 1 à 5.

7. Véhicule à moteur selon la revendication 6, **caractérisé en ce que** la coquille de siège (1) est vissée à la carrosserie (17) sur chacune de ses parties de bord (6-9).
